Europäisches Patentamt

(19) European Patent Office

Office européen des brevets

(11) Numéro de publication : **0 334 712 B1**

(12) **FASCICULE DE BREVET EUROPEEN**

(45) Date de publication du fascicule du brevet :
**04.12.91 Bulletin 91/49**

(51) Int. Cl.⁵ : **C04B 7/38**

(21) Numéro de dépôt : **89400691.5**

(22) Date de dépôt : **13.03.89**

(54) **Procédé de préparation d'un mélange de matières minérales et produit broyé et aggloméré obtenu par ce procédé.**

(30) Priorité : **14.03.88 FR 8803293**

(43) Date de publication de la demande :
**27.09.89 Bulletin 89/39**

(45) Mention de la délivrance du brevet :
**04.12.91 Bulletin 91/49**

(84) Etats contractants désignés :
**AT BE CH DE ES FR GB GR IT LI LU NL SE**

(56) Documents cités :
**AT-B- 1 810**
**CH-A- 335 989**
**DE-A- 2 549 301**
**DE-A- 2 640 044**
**DE-B- 1 052 291**
**GB-A- 824 219**

(73) Titulaire : **CLE**
**170, Place Henri Régnault**
**F-92090 Courbevoie (FR)**
Titulaire : **SOCIETE DES CIMENTS FRANCAIS**
**5 Place de la Pyramide Quartier Villon Puteaux**
**F-92088 Paris la Défense Cédex 22 (FR)**

(72) Inventeur : **Brulefert, Michel**
**88 Rue Bokanowski**
**F-92600 Asnières (FR)**
Inventeur : **Dupuis, Jacques**
**Rue du Bief**
**F-71240 Varennes le Grand (FR)**
Inventeur : **Ponchaut, Robert**
**10 Square du Mantois**
**F-78200 Mantes la Jolie (FR)**

(74) Mandataire : **Durand, Yves Armand Louis et al**
**CABINET WEINSTEIN 20, Avenue de**
**Friedland**
**F-75008 Paris (FR)**

## Description

La présente invention a essentiellement pour objet un procédé de préparation d'un mélange de matières minérales.

Elle vise également un produit broyé et aggloméré obtenu par ce procédé.

On connait déjà des procédés et des installations pour préparer un mélange de matières minérales, ce après quoi le mélange est soumis à un traitement ultérieur tel que par exemple stockage, déstockage, séchage, transport, broyage ou analogue.

Cependant, il se pose des problèmes lorsque l'on veut préparer un mélange de matières difficilement compactables et divisées, telles que par exemple le calcaire et de matières compactables plastiques et plus ou moins humides et collantes, comme c'est par exemple le cas de l'argile.

C'est ainsi que dans le document DE-A-2.549.301, on a proposé de réaliser un tel mélange en utilisant une matière d'addition retenant l'eau libérée des matériaux comprimés.

Lesdits problèmes s'expliquent par le fait que certaines parties du mélange sont enrichies en matières compactables et ont tendance à adhérer aux parois ce qui, comme on le comprend, est très gênant pour l'exploitation ultérieure du mélange.

Aussi la présente invention a pour but de remédier à ces inconvénients en proposant notamment un procédé de préparation d'un mélange qui peut être traité par la suite dans tout type d'appareil sans risque d'adhérence sur une partie quelconque de l'appareil.

A cet effet, l'invention a pour objet un procédé de préparation d'un mélange de matières minérales et du type consistant à mélanger ces matières avant de soumettre le mélange à un traitement ultérieur, tel que par exemple stockage, déstockage, séchage, transport, broyage ou analogue, caractérisé en ce que ledit mélange, comprenant au moins une matière minérale difficilement compactable, telle que par exemple le calcaire, et au moins une autre matière minérale facilement compactable et naturellement adhérente telle que par exemple l'argile, est soumise à un broyage par compression ayant pour effet de provoquer une diffusion et une répartition de l'humidité entre les matières sèches et les matières humides de telle sorte que le mélange entre les matières soit intimement réalisé et ait une teneur en eau telle qu'il soit aggloméré sous la forme de plaquettes, briquettes ou autres éléments non adhérents entre eux ou sur les parois des appareils de traitement ultérieur du produit.

On comprend donc que le mélange obtenu par le procédé de l'invention conduira à des produits qui pourront être par la suite traités très facilement et avec un bon rendement dans tout type d'appareil de séchage ou de broyage par exemple sans risque d'adhérer entre eux ou de se coller aux parois des appareils, ce qui entraverait leur fonctionnement.

Ce procédé est encore caractérisé en ce que la diffusion et la répartition précitées de l'humidité entre les matières sèches et les matières humides sont réalisées par des fissures créées dans lesdites matières sèches sous l'effet du broyage.

Selon encore une autre caractéristique de l'invention, la compression du mélange à réaliser est effectuée à une pression susceptible de fragmenter la matière minérale précitée difficilement compactable, et est comprise entre environ 10 et 500 MPa et de préférence comprise entre 30 et 200 MPa.

Comme on le décrira plus loin, il se produit une uniformisation de l'humidité dans l'ensemble de la matière subissant le compactage sous l'effet de la pression, ce qui conduit à un produit non collant ou non adhérent et donc facilement utilisable.

Mais d'autres avantages et caractéristiques de l'invention apparaîtront mieux dans la description détaillée qui suit et se réfère aux dessins annexés, donnés uniquement à titre d'exemple et dans lesquels :

La figure 1 est une vue très schématique et en élévation d'une installation permettant la préparation d'un mélange selon cette invention ; et

La figure 2 est une vue de dessus de l'installation de la figure 1 dans laquelle on a supprimé les moyens d'alimentation en matières minérales, pour plus de clarté.

Comme on le voit sur les figures, une installation permettant le conditionnement de matières relativement humides selon cette invention comprend essentiellement un dispositif d'alimentation 1 auquel est associée une presse à rouleaux 2.

Le dispositif d'alimentation 1 se compose d'une trémie 3 recevant des matières minérales à mélanger, comme matérialisé par les flèches F, et contenant une ou plusieurs vis sans fin 4 entraînées en rotation par un moteur à vitesse variable 5. L'axe de la ou des vis 4 peut être vertical ou incliné par rapport à la verticale à la condition qu'il puisse, dans tous les cas, forcer la matière dans la trémie 3 à se diriger vers la presse à rouleaux 2.

Cette presse 2 comporte un bâti 6 à l'intérieur duquel sont disposés deux cylindres 7, 8 supportés à leurs extrémités par des roulements montrés schématiquement en 9 et 10 sur les figures.

Le cylindre 7 peut se déplacer horizontalement en coulissant sur des rails 11, étant entendu que les roulements 10 du cylindre 7 ne sont pas fixés sur le châssis 6 mais reposent sur lesdits rails.

On a montré schématiquement en 11 et 12 des vérins hydrauliques par exemple dont les tiges 13 peuvent exercer une poussée sur les roulements 10 du cylindre 7 déplaçable sur les rails 11.

Une butée mobile 14 permet d'empêcher que le cylindre déplaçable 7 vienne en contact direct avec le cylindre fixe 8 et ménage ainsi un entrefer 15 qui est bien entendu ajustable par déplacement de la butée 14.

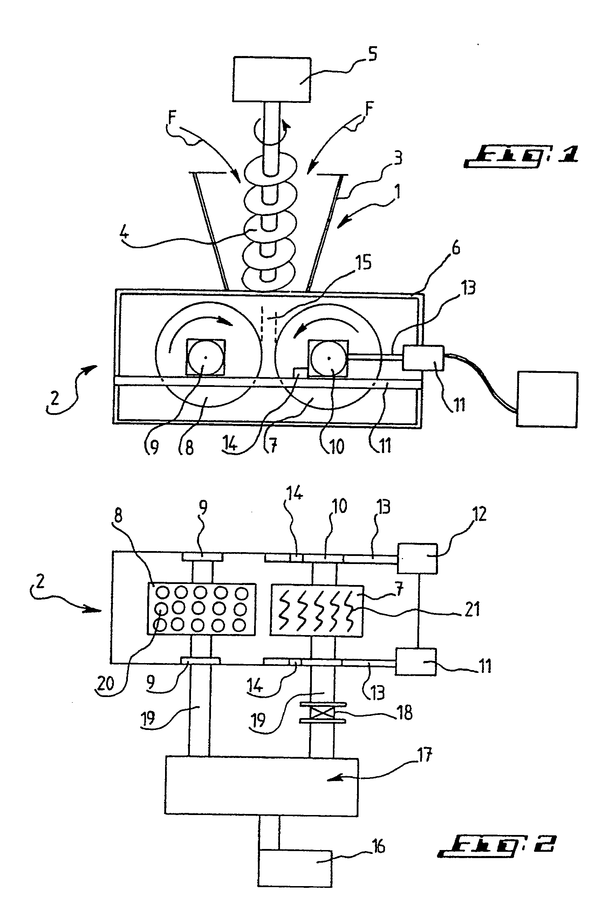

Les deux cylindres 7 et 8 sont entraînés en rotation et en sens inverse, comme matérialisé par des flèches sur les figures 1, de façon à capter la matière provenant de la trémie 3.

L'entraînement des cylindres est assuré de préférence par un seul moteur repéré en 16 sur la figure 2 de façon à conserver une vitesse de rotation identique, et cela par l'intermédiaire d'un ou deux réducteurs repérés schématiquement en 17, étant entendu qu'un système de transmission articulée 18 pour le cylindre mobile, peut être prévu. On a montré en 19 sur la figure 2, les arbres d'entraînement des rouleaux ou cylindres 7 et 8.

Comme on le voit sur la figure 2, les surfaces des cylindres 7, 8 sont réalisées de telle façon qu'elles comportent soit des alvéoles par exemple sphériques 20, soit des aspérités 21 en forme de chevrons. Les alvéoles peuvent être par exemple réalisées par usinage du cylindre ou érosion électro-chimique, tandis que les aspérités en chevrons peuvent être obtenues par soudure d'éléments rapportés.

La trémie 1 est bien entendu disposée au-dessus du bâti 6, comme on le voit sur la figure 1, et au droit de l'entrefer 15 compris entre les deux cylindres 7 et 8. On peut prévoir un dispositif de mesure de l'entrefer au moyen d'un capteur délivrant un signal, et cela de façon à assurer un asservissement de la vitesse de rotation de la vis d'alimentation 4 pour maintenir un entrefer constant.

Par ailleurs, la mesure de la puissance des moteurs d'entraînement 5, 16 peut servir à contrôler la vitesse de rotation de la vis 4 afin de maintenir une puissance constante.

Pour une meilleure compréhension de l'invention, on décrira ci-après le fonctionnement de l'installation qui vient d'être décrite en même temps qu'un essai de préparation d'un mélange de matière calcaire et de matière argileuse, étant entendu que l'on donnera également tous les avantages procurés.

Les essais ont été réalisés avec une presse telle que 2 équipée de rouleaux 7, 8 de diamètre D égal à 600 mm chacun et dont la longueur utile L était de 150 mm. On observera déjà qu'il a été possible de traiter une matière collante dont l'un des composants avait une humidité sur sec de 20%.

A cet effet, l'écartement des rouleaux à vide ou entrefer 15 a été calé à 8 mm et une force F de 8,5 tonnes a été appliquée sur le rouleau mobile 7 par l'intermédiaire des vérins hydrauliques 11 et 12, ce qui correspond à une pression conventionnelle de compactage de :

$$Pc = \frac{100\ F}{3\ LD} = 31\ \text{MPa}.$$

On a alimenté la trémie 3 en y déversant deux matières de composition minéralogique différente et à savoir : un calcaire de granulométrie 0-40 mm ayant une humidité de 7% environ, et une matière argileuse sous forme de blocs de 0-100 mm ayant une humidité moyenne de 20%.

Les débits respectifs des deux matières étaient dans un rapport voisin de deux parties de calcaire pour une partie d'argile.

Au cours du passage entre les deux rouleaux 7, 8, les deux matières ont été broyées et agglomérées ensemble de telle manière que le produit final se présente sous la forme de plaquettes d'une épaisseur d'environ 14 mm. Cette épaisseur est supérieure à l'écartement à vide des rouleaux car en fonction de la qualité de la matière et de la pression appliquée le rouleau mobile s'écarte du rouleau fixe jusqu'à atteindre une position d'équilibre.

A aucun moment, il n'a été décelé un ruissellement d'eau ou un égouttage provenant de la matière comprimée entre les rouleaux ou des plaquettes obtenues. Cela provient du fait qu'au cours du passage dans la presse, et pour une pression prédéterminée, la matière est broyée avec production d'éléments qui captent l'humidité de la matière la plus humide, à savoir l'argile qui a été choisi dans cet exemple. Plus précisément, il a été constaté que lors du broyage, il se produit des fissures dans les morceaux ou grains de matière relativement secs, à savoir le calcaire, lesquelles fissures captent avantageusement l'humidité provenant de la matière la plus humide, à savoir l'argile. Autrement dit, la matière entre les rouleaux subit une pression suffisamment élevée pour être broyée et pour que l'humidité de l'argile diffuse dans la matière la plus sèche, à savoir le calcaire dans l'exemple considéré.

Les plaquettes ainsi obtenues ne sont pas collantes comme l'était la matière argileuse de départ, et ceci sans qu'il y ait élimination d'eau.

Ce résultat peut être obtenu avec plusieurs types de matières minérales, et il a été constaté qu'un élément favorable à l'application de l'invention réside dans l'aptitude que possède la matière la moins humide à se réduire sous l'effet de la pression des rouleaux 7, 8, et cela à une granulométrie telle qu'il existe beaucoup d'élément fins et très fins capables "d'éponger" l'humidité de la matière la plus humide. Les matières possédant cette aptitude sont généralement des matières dures et fragiles composées soit de grains naturels très fins, soit obtenues par frittage à chaud de composés minéraux issus de matières broyées.

C'est ainsi que l'on a testé avec succès des matériaux tels que des calcaires denses, des calcaires crayeux et du clinker de ciment.

On a donc réalisé suivant l'invention un procédé de préparation d'un mélange de matières minérales humides et collantes pour une partie, l'opération de mélange avec compression permettant une diffusion et une répartition de l'eau au sein du mélange telles que ledit mélange, qui peut se présenter sous des formes diverses, telles que briquettes ou plaquettes, ne présente aucun risque d'adhérence sur une paroi quelconque et peut par conséquent être traité facilement et efficacement par la suite pour permettre par exemple son stockage, son déstockage, son séchage, son broyage, son transport ou analogue.

## Revendications

1. Procédé de préparation d'un mélange de matières minérales et du type consistant à mélanger ces matières avant de soumettre le mélange à un traitement ultérieur, tel que par exemple stockage, déstockage, séchage, transport, broyage ou analogue, caractérisé en ce que ledit mélange, comprenant au moins une matière minérale difficilement compactable, telle que par exemple le calcaire, et au moins une autre matière minérale facilement compactable et adhérente, telle que par exemple l'argile, est soumise à un broyage par compression ayant pour effet de provoquer une diffusion et une répartition de l'humidité entre les matières sèches et les matières humides de telle sorte que le mélange entre les matières soit intimement réalisé et ait une teneur en eau telle qu'il soit aggloméré sous la forme de plaquettes, briquettes ou autres éléments non adhérents entre eux ou sur les parois des appareils de traitement ultérieur du produit.

2. Procédé selon la revendication 1, caractérisé en ce que la diffusion et la répartition précitées de l'humidité entre les matières sèches et les matières humides sont réalisées par des fissures créées dans lesdites matières sèches sous l'effet du broyage.

3. Procédé selon la revendication 1 ou 2, caractérisé en ce que la compression du mélange précité est effectuée à une pression susceptible de fragmenter la matière minérale précitée difficilement compactable et est comprise entre environ 10 et 500 MPa et de préférence comprise entre 30 et 200 MPa.

## Claims

1. Method of preparing a mixture of mineral materials and of the type consisting in blending these materials before subjecting the mixture to a later treatment, such for example as storing, removing from stock, drying, transporting, crushing or the like, characterized in that the said mixture comprising at least one mineral material difficult to be compacted such for example as limestone and at least another easily compactable and adhesive mineral material such for example as clay is subjected to a pounding through compression having the effect of causing a diffusion and a distribution of the moisture between the dry materials and the moist materials so that the mixture between the materials be intimately carried out and has a water content such that it be agglomerated in the shape of small plates, briquettes or other elements non adherent to each other or onto the walls of the apparatus for later processing of the product.

2. Method according to claim 1, characterized in that the aforesaid diffusion and distribution of moisture between the dry materials and the moist materials are provided by cracks created in the said dry materials under the effect of the milling.

3. Method according to claim 1 or 2, characterized in that the compression of the aforesaid mixture is effected at a pressure susceptible of splitting up the aforesaid mineral material difficult to be compacted and which is lying between about 10 and 500 MPa and preferably lying between 30 and 200 MPa.

## Patentansprüche

1. Verfahren zur Vorbereitung eines Gemisches aus Mineralwerkstoffen und derjenigen Gattung, die darin besteht, diese Stoffe zu mischen bevor das Gemisch einer Weiterbehandlung, wie zum Beispiel Lagerung, Entnahme aus dem Lager, Trocknung, Förderung, Zerkleinerung oder dergleichen unterworfen wird, dadurch gekennzeichnet, dass das besagte Gemisch, das wenigstens einen schwer verdichtbaren Mineralstoff, wie z.B. Kalk und wenigstens einen anderen leicht verdichtbaren und festhaftenden Mineralstoff, wie z.B. Ton umfasst, einer Zerkleinerung durch Zusammendrücken unterworfen wird, welche die Wirkung hat, eine Diffusion und eine Verteilung der Feuchtigkeit zwischen den trockenen Stoffen und den feuchten Stoffen derart zu verursachen, dass das Mischen der Stoffe intensiv durchgeführt wird und einen derartigen Wassergehalt hat, dass das Gemisch in der Gestalt von Plättchen, Briquetten und anderen nicht aneinander oder an den Wänden der Geräte zur Weiterbehandlung des Erzeugnisses festhaftenden Elementen zusammengebacken wird.

2. Vorrichtung nach Anspruch 1, dadurch gekennzeichnet, dass die vorgennante Diffusion und Verteilung der Feuchtigkeit zwischen den trockenen Stoffen und den feuchten Stoffen durch die in den besagten trockenen Stoffen unter der Wirkung der Zerkleinerung gebildeten Risse geschieht.

3. Verfahren nach Anspruch 1 oder 2, dadurch gekennzeichnet, dass das Zusammendrücken des vorgennanten Gemisches bei einem Druck der fähig ist, den vorgennanten schwer verdichtbaren Mineralstoff zu zersplittern und der zwischen ungefähr 10 und 500 MPa und vorzugsweise zwischen 30 und 200 MPa liegt, durchgeführt wird.

*Fig. 1*

*Fig. 2*